# EUROPÄISCHE PATENTSCHRIFT

(11) **EP 3 483 134 B1**
(45) Veröffentlichungstag und Bekanntmachung des Hinweises auf die Patenterteilung: **15.04.2020**
(21) Anmeldenummer: 17200546.4
(22) Anmeldetag: 08.11.2017
(51) Int. Cl.: C04B 35/103, B22D 41/50

(54) **FEUERFESTE PLATTE FÜR EINEN SCHIEBERVERSCHLUSS, VERWENDUNG EINES SCHMELZROHSTOFFS ALS WERKSTOFF IN EINER SOLCHEN PLATTE SOWIE EIN EINE SOLCHE PLATTE AUFWEISENDES SCHMELZGEFÄSS**
REFRACTORY PLATE FOR SLIDE GATE, USE OF A MELT AS A RAW MATERIAL IN SUCH A PLATE AND A MELTING VESSEL COMPRISING SUCH A PLATE
PANNEAU REFRACTAIRE POUR UN PLATEAU DE COULÉE, UTILISATION D'UNE MATIÈRE PREMIÈRE EN FUSION EN TANT QUE MATÉRIAU DANS UN TEL PANNEAU AINSI QUE RÉCIPIENT DE FUSION COMPORTANT UN TEL PANNEAU

(43) Veröffentlichungstag der Anmeldung: 15.05.2019
(73) Patentinhaber: Refractory Intellectual Property GmbH & Co. KG, 1100 Wien (AT)
(72) Erfinder: GRASSET-BOURDEL, Renaud, 8793 Trofaiach (AT); WIESEL, Martin, 8793 Trofaiach (AT); MEURILLON, Vincent, 91410 Dourda (FR); TAFERNER, Harald, 8750 Judenburg (AT)
(74) Vertreter: Berkenbrink, Kai-Oliver

(56) Entgegenhaltungen:
- EP-A1- 2 848 598
- EP-A1- 3 029 006
- WO-A1-99/47472
- ROUTSCHKA ET AL: "Feuerfeste Baustoffe fuer den Pfannenschieberverschluss im Spiegel der Literatur", KERAMISCHE ZEITSCH, DVS VERLAG, DUESSELDORF, DE, Bd. 29, Nr. 10, 1. Januar 1977 (1977-01-01), Seiten 516-526, XP009178055, ISSN: 0023-0561

## Beschreibung

Die Erfindung betrifft eine feuerfeste Platte für einen Schieberverschluss zur Regelung einer Durchflussmenge von flüssigem Stahl, die Verwendung eines Schmelzrohstoffs als Werkstoff in einer solchen Platte sowie ein Schmelzgefäß zur Aufnahme von flüssigem Stahl, das zur Regelung einer Durchflussmenge von flüssigem Stahl aus dem Schmelzgefäß eine solche Platte aufweist.

Feuerfeste Platten in einem Schieberverschluss dienen zur Regelung einer Durchflussmenge von flüssigem Stahl aus einem Schmelzgefäß zur Aufnahme von flüssigem Stahl beziehungsweise einer Stahlschmelze. Bei einem solchen Schmelzgefäß kann es sich insbesondere um eine Gießpfanne ("Ladle") oder um eine Zwischenpfanne ("Tundish") in einer Stranggießanlage zum Vergießen von Stahl handeln. Um eine in einem solchen Schmelzgefäß befindliche Stahlschmelze in ein diesem Schmelzgefäß produktionstechnisch nachgeschaltetes Aggregat zu gießen, weisen solche Schmelzgefäße eine Öffnung auf, die insbesondere am Boden solcher Schmelzgefäße angeordnet ist. Zur Regelung einer Durchflussmenge von flüssigem Stahl durch eine solche Öffnung werden feuerfeste Platten in einem Schieberverschluss verwendet. Dabei weisen solche Platten eine Durchlassöffnung auf, durch die flüssiger Stahl hindurchleitbar ist.

Ein Schieberverschluss ist im Bereich der Öffnung des Schmelzgefäßes angeordnet. Ein solcher Schieberverschluss umfasst mehrere feuerfeste Platten zur Regelung der Durchflussmenge von flüssigem Stahl aus der Öffnung. Insoweit umfasst ein solcher Schieberverschluss regelmäßig eine oder zwei feststehende feuerfeste Platten, die jeweils eine Durchlassöffnung aufweisen, die mit der Öffnung des Schmelzgefäßes fluchtet. Eine weitere feuerfeste Platte, die sogenannte "Schieberplatte", liegt plan gegenüber den feststehenden Platten an und ist gegenüber diesen feststehenden Platten verschiebbar angeordnet. Dabei ist die Schieberplatte in eine erste Stellung schiebbar, in der die Durchlassöffnung der Schieberplatte mit den Durchlassöffnungen der feststehenden Platten fluchtet, so dass der flüssige Stahl durch die Öffnung des Schmelzgefäßes und die miteinander fluchtenden Durchlassöffnungen der Platten aus dem Schmelzgefäß fließen kann. Ferner ist die Schieberplatte in eine zweite Stellung schiebbar, in der die Durchlassöffnungen der feststehenden Platten durch die Schieberplatte verschlossen sind. Zur Verschiebung der Schieberplatte kann ein hydraulischer oder elektrischer Antrieb vorgesehen sein.

Eine feststehende feuerfeste Platte, die oberhalb einer Schieberplatte angeordnet ist, wird auch als "Oberplatte" oder "Bodenplatte" bezeichnet. Mit "Platte" wird hierin sowohl eine "Oberplatte", als auch eine "Schieberplatte" bezeichnet.

Platten in einem Schieberverschluss bestehen aus feuerfesten keramischen Werkstoffen.

Während des Durchleitens von flüssigem Stahl durch die Durchlassöffnung der Platte ist diese extremen Temperaturschwankungen, extremen Temperaturen sowie einem extremen mechanischen beziehungsweise korrosiven Angriff ausgesetzt. Die extremen Temperaturschwankungen ergeben sich dabei nicht nur während des Öffnens und Schließens des Schieberverschlusses sondern auch während des Durchleitens der Stahlschmelze durch die Durchlassöffnung aufgrund von Temperaturgradienten innerhalb der Platte.

Um diesen extremen Belastungen standzuhalten, muss der feuerfeste keramische Werkstoff der Platte neben einer hohen Feuerfestigkeit insbesondere auch eine hohe Thermoschockbeständigkeit sowie eine hohe Korrosionsbeständigkeit aufweisen.

Bekanntermaßen besteht dabei jedoch das Dilemma, dass bei den aus dem Stand der Technik bekannten feuerfesten keramischen Werkstoffen zur Herstellung von feuerfesten Platten eine Verbesserung einer dieser Beständigkeiten eine Verschlechterung der anderen Beständigkeit zur Folge hat. Insoweit kann beispielsweise bei den aus dem Stand der Technik bekannten feuerfesten Werkstoffen für die Herstellung von Platten eine Verbesserung der Korrosionsbeständigkeit eine Verschlechterung der Thermoschockbeständigkeit zur Folge haben.

Vor diesem Hintergrund liegt der Erfindung die Aufgabe zugrunde, eine feuerfeste Platte für einen Schieberverschluss zur Regelung einer Durchflussmenge von flüssigem Stahl zur Verfügung zu stellen, die sowohl eine hohe Thermoschockbeständigkeit als auch eine hohe Korrosionsbeständigkeit aufweist. Insbesondere liegt der vorliegenden Erfindung die Aufgabe zugrunde, eine solche Platte für einen Schieberverschluss einer Gießpfanne oder einer Zwischenpfanne in einer Stranggießanlage zum Vergießen von Stahl zur Verfügung zu stellen, die eine hohe Thermoschockbeständigkeit und eine hohe Korrosionsbeständigkeit aufweist, insbesondere eine höhere Thermoschockbeständigkeit und Korrosionsbeständigkeit als die aus dem Stand der Technik bekannten feuerfesten keramischen Werkstoffe für Platten.

Eine weitere Aufgabe der Erfindung besteht darin, ein Schmelzgefäß zur Aufnahme von flüssigem Stahl zur Verfügung zu stellen, wobei das Schmelzgefäß wenigstens eine solche Platte zur Regelung einer Durchflussmenge von flüssigem Stahl aus dem Schmelzgefäß aufweist.

Zur Lösung dieser Aufgaben wird erfindungsgemäß zur Verfügung gestellt eine feuerfeste Platte für einen Schieberverschluss zur Regelung einer Durchflussmenge von flüssigem Stahl, die einen Schmelzrohstoff umfasst, wobei dieser Schmelzrohstoff die folgenden Elemente jeweils in einem Anteil im Bereich der folgenden Massenanteile aufweist:

| | |
|---|---|
| Aluminium: | 46-55 Masse-%; |
| Sauerstoff: | 42-49 Masse-%; |
| Kohlenstoff: | 0,1-3 Masse-%; |
| Silizium: | 0,1-4 Masse-%. |

Überraschend hat sich im Rahmen der Erfindung herausgestellt, dass eine feuerfeste Platte für einen Schieberverschluss zur Verfügung gestellt werden kann, die die vorstehenden Aufgaben löst, wenn diese einen feuerfesten Werkstoff in Form des vorstehenden Schmelzrohstoffes mit den angegebenen Elementen in den angegebenen Massenanteilen aufweist. Insbesondere wurde erfindungsgemäß festgestellt, dass durch eine Platte, die einen solchen Schmelzrohstoff aufweist, eine Platte zur Verfügung gestellt werden kann, die gleichzeitig sowohl eine hohe Thermoschockbeständigkeit als auch eine hohe Korrosionsbeständigkeit aufweist.

Mit "Platte" wird hierin eine Oberplatte, Bodenplatte oder Schieberplatte für einen Schieberverschluss bezeichnet, und zwar sowohl eine ungebrannte (insbesondere harzgebundene) als auch eine gebrannte (insbesondere kohlenstoffgebundene) Platte.

Bei dem "Schmelzrohstoff" der erfindungsgemäßen Platte, der hierin auch als "erfindungsgemäßer Schmelzrohstoff" bezeichnet wird, handelt es sich um einen Rohstoff, der erhalten wurde aus einer abgekühlten, erstarrten Schmelze. Schmelzrohstoffe gemäß dem Stand der Technik sind beispielsweise in Form von Schmelzkorund oder Schmelzmagnesia bekannt.

Die Erfinder vermuten, dass die gute Thermoschockbeständigkeit und gute Korrosionsbeständigkeit der erfindungsgemäßen Platte auf die Phasen im erfindungsgemäßen Schmelzrohstoff zurückzuführen sind, die sich bei den erfindungsgemäßen Anteilen der vorstehenden Elemente im erfindungsgemäßen Schmelzrohstoff ausbilden.

Die hierin offenbarten Massenanteile der Elemente im erfindungsgemäßen Schmelzrohstoff sind jeweils bezogen auf die Gesamtmasse des erfindungsgemäßen Schmelzrohstoffs in der erfindungsgemäßen Platte.

Der Massenanteil der Elemente im erfindungsgemäßen Schmelzrohstoff ist bestimmt gemäß ASTM E 1508-98 (Reapproved 2003).

Der Massenanteil an Aluminium im erfindungsgemäßen Schmelzrohstoff liegt im Bereich von 46 bis 55 Masse-%. Erfindungsgemäß wurde festgestellt, dass sich die feuerfesten Eigenschaften der erfindungsgemäßen Platte, insbesondere deren Thermoschockbeständigkeit und Korrosionsbeständigkeit, zunehmend verbessern, soweit der Anteil an Aluminium im erfindungsgemäßen Schmelzrohstoff zunehmend einem Anteil von 49,6 Masse-% angenähert ist. Insoweit kann bevorzugter ein Anteil an Aluminium im erfindungsgemäßen Schmelzrohstoff im Bereich von 47 bis 53 Masse-% und noch bevorzugter im Bereich von 48 bis 52 Masse-% vorgesehen sein.

Der Massenanteil an Sauerstoff im erfindungsgemäßen Schmelzrohstoff liegt im Bereich von 42 bis 49 Masse-%. Erfindungsgemäß wurde festgestellt, dass sich die feuerfesten Eigenschaften der erfindungsgemäßen Platte, insbesondere deren Thermoschockbeständigkeit und Korrosionsbeständigkeit, zunehmend verbessern, soweit der Anteil an Sauerstoff im erfindungsgemäßen Schmelzrohstoff zunehmend einem Anteil von 45,8 Masse-% angenähert ist. Insoweit kann bevorzugter ein Anteil an Sauerstoff im erfindungsgemäßen Schmelzrohstoff im Bereich von 43 bis 49 Masse-% und noch bevorzugter im Bereich von 44 bis 49 Masse-% vorgesehen sein.

Der Massenanteil an Kohlenstoff im erfindungsgemäßen Schmelzrohstoff liegt im Bereich von 0,1 bis 3 Masse-%. Erfindungsgemäß wurde festgestellt, dass sich die feuerfesten Eigenschaften der erfindungsgemäßen Platte, insbesondere deren Thermoschockbeständigkeit und Korrosionsbeständigkeit, zunehmend verbessern, soweit der Anteil an Kohlenstoff im erfindungsgemäßen Schmelzrohstoff zunehmend einem Anteil von 0,5 Masse-% angenähert ist. Insoweit kann bevorzugter ein Anteil an Kohlenstoff im erfindungsgemäßen Schmelzrohstoff im Bereich von 0,2 bis 2,0 Masse-% und noch bevorzugter im Bereich von 0,3 bis 1,0 Masse-% vorgesehen sein.

Der Massenanteil an Silizium im erfindungsgemäßen Schmelzrohstoff liegt im Bereich von 0,1 bis 4 Masse-%. Erfindungsgemäß wurde festgestellt, dass sich die feuerfesten Eigenschaften der erfindungsgemäßen Platte, insbesondere deren Thermoschockbeständigkeit und Korrosionsbeständigkeit, zunehmend verbessern, soweit der Anteil an Silizium im erfindungsgemäßen Schmelzrohstoff zunehmend einem Anteil von 1,1 Masse-% angenähert ist. Insoweit kann bevorzugter ein Anteil an Silizium im erfindungsgemäßen Schmelzrohstoff im Bereich von 0,5 bis 3 Masse-% und noch bevorzugter im Bereich von 0,5 bis 2 Masse-% vorgesehen sein.

Erfindungsgemäß wurde ferner festgestellt, dass sich die feuerfesten Eigenschaften der erfindungsgemäßen Platte, insbesondere deren Thermoschockbeständigkeit und Korrosionsbeständigkeit, weiter verbessern lassen, soweit der erfindungsgemäße Schmelzrohstoff ferner Stickstoff aufweist, bevorzugt in einem Massenanteil im Bereich von 0,01 bis 0,3 Masse-%.

Erfindungsgemäß wurde festgestellt, dass sich die feuerfesten Eigenschaften der erfindungsgemäßen Platte verschlechtern können, wenn der erfindungsgemäße Schmelzrohstoff neben den Elementen Aluminium, Silizium, Sauerstoff, Kohlenstoff und Stickstoff, insbesondere in den vorbezeichneten Anteilen, Anteile an weiteren Elementen umfasst. Nach einer bevorzugten Ausführungsform ist daher vorgesehen, dass der erfindungsgemäße Schmelzrohstoff der erfindungsgemäßen Platte die Elemente Aluminium, Sauerstoff, Kohlenstoff, Silizium und Stickstoff in einem Gesamtanteil von wenigsten 98 Masse-% aufweist, noch bevorzugter in einem Gesamtanteil von wenigsten 99 Masse-%, jeweils bezogen auf die Gesamtmasse des Schmelzrohstoffs.

Entsprechend kann vorgesehen sein, dass der erfindungsgemäße Schmelzrohstoff neben den Elementen Aluminium, Sauerstoff, Kohlenstoff, Silizium und Stickstoff weitere Elemente in einem Gesamtanteil unter 2 Masse-%, noch bevorzugter in einem Gesamtanteil unter 1 Masse-%, jeweils bezogen auf die Gesamtmasse des erfindungsgemäßen Schmelzrohstoffs, aufweist.

Nach einer bevorzugten Ausführungsform ist vorgesehen, dass der erfindungsgemäße Schmelzrohstoff das Element Silizium ganz oder teilweise in Form von SiC (Siliziumcarbid) aufweist. Bevorzugt ist vorgesehen, dass der erfindungsgemäße Schmelzrohstoff Silizium vorwiegend in Form von SiC aufweist. Nach einer Ausführungsform ist vorgesehen, dass der erfindungsgemäße Schmelzrohstoff einen Anteil an SiC im Bereich von 0,1 bis 3 Masse-% aufweist.

Überraschend wurde im Rahmen der Erfindung festgestellt, dass die erfindungsgemäße Platte insbesondere dann eine hervorragende Thermoschockbeständigkeit und Korrosionsbeständigkeit aufweist, wenn der erfindungsgemäße Schmelzrohstoff in der erfindungsgemäßen Platte die Phase Al₂₈C₆N₆O₂₁ umfasst. Nach einer bevorzugten Ausführungsform ist vorgesehen, dass der erfindungsgemäße Schmelzrohstoff der erfindungsgemäßen Platte die Phase Al₂₈C₆N₆O₂₁ in einem Anteil im Bereich von 0,05 bis 10 Masse-% aufweist.

Nach einer bevorzugten Ausführungsform ist vorgesehen, dass der erfindungsgemäße Schmelzrohstoff die Phasen SiC und Al₂₈C₆N₆O₂₁ in einer Gesamtmasse im Bereich von 0,15 bis 11,5 Masse-%, noch bevorzugter in einer Gesamtmasse im Bereich von 0,5 bis 11,5 Masse-% aufweist.

Bevorzugt ist erfindungsgemäß vorgesehen, dass der erfindungsgemäße Schmelzrohstoff die Phase Korund (Al₂O₃) umfasst, bevorzugt als Hauptphase, besonders bevorzugt in einem Anteil von wenigstens 50 Masse-%, bezogen auf die Gesamtmasse des erfindungsgemäßen Schmelzrohstoffs. Nach einer bevorzugten Ausführungsform weist der erfindungsgemäße Schmelzrohstoff die Phase Korund in einem Anteil im Bereich von 80 bis 98 Masse-% auf, noch bevorzugter in einem Anteil im Bereich von 85 bis 98 Masse-%.

Als weitere Phasen kann der erfindungsgemäße Schmelzrohstoff wenigstens eine der folgenden Phasen aufweisen: metallisches Silizium, metallisches Aluminium oder Al₄O₄C, bevorzugt in einer Gesamtmasse unter 3 Masse-%.

Die vorstehenden Angaben zum Massenanteil an SiC, Al₂₈C₆N₆O₂₁, Korund, metallischen Phasen sowie Al₄O₄C am erfindungsgemäßen Schmelzrohstoff sind jeweils bezogen auf die Gesamtmasse des erfindungsgemäßen Schmelzrohstoffs.

Erfindungsgemäß wurde festgestellt, dass die Korngröße des erfindungsgemäßen Schmelzrohstoffs einen Einfluss auf die Thermoschockbeständigkeit und Korrosionsbeständigkeit der erfindungsgemäßen Platte hat. Insoweit wurde festgestellt, dass die Thermoschockbeständigkeit und Korrosionsbeständigkeit der erfindungsgemäßen Platte besonders hoch ist, wenn der erfindungsgemäße Schmelzrohstoff Körner mit einer groben Kornfraktion umfasst, also Körner mit einer großen mittleren Korngröße. Insoweit ist nach einer bevorzugten Ausführungsform vorgesehen, dass der erfindungsgemäße Schmelzrohstoff Körner mit einer mittleren Korngröße über 0,5 mm umfasst. Besonders bevorzugt ist vorgesehen, dass wenigstens 45 Masse-% des erfindungsgemäßen Schmelzrohstoffs in der erfindungsgemäßen Platte in einer mittleren Korngröße von wenigstens 0,5 mm vorliegt. Nach einer Fortbildung ist vorgesehen, dass wenigstens 45 % des erfindungsgemäßen Schmelzrohstoffs in einer mittleren Korngröße im Bereich von 0,5 bis 5 mm und besonders bevorzugt in einer mittleren Korngröße im Bereich von 0,5 bis 3 mm vorliegt. Nach einer Ausführungsform ist vorgesehen, dass höchstens 55 Masse-% des erfindungsgemäßen Schmelzrohstoffs in einer mittleren Korngröße unter 0,5 mm vorliegt. Die vorgemachten Angaben zur Korngröße in Masse-% sind jeweils bezogen auf die Gesamtmasse des erfindungsgemäßen Schmelzrohstoffs. Die Korngröße ist bestimmt gemäß DIN EN 933-2:1996-01.

Zur Herstellung des erfindungsgemäßen Schmelzrohstoffs der erfindungsgemäßen Platte wird zunächst ein Versatz aus Rohstoffen zur Verfügung gestellt, dieser Versatz zu einer Schmelze erschmolzen und die Schmelze anschließend abgekühlt. Die abgekühlte, erstarrte Schmelze stellt anschließend einen erfindungsgemäßen Schmelzrohstoff dar, wie er in der erfindungsgemäßen Platte Verwendung findet. Um den erfindungsgemäßen Schmelzrohstoff als Rohstoff zur Herstellung der erfindungsgemäßen Platte zur Verfügung zu stellen, kann die abgekühlte, erstarrte Schmelze stückig aufbereitet werden, also beispielsweise auf die gewünschte Korngröße zerkleinert werden, insbesondere auf eine wie vorstehend angegebene Korngröße.

Um einen erfindungsgemäßen Schmelzrohstoff mit den vorstehenden Anteilen an Aluminium, Silizium und Sauerstoff zur Verfügung zu stellen, umfasst der zur Herstellung des erfindungsgemäßen Schmelzrohstoffs zur Verfügung gestellte Versatz zum einen bevorzugt wenigstens einen Rohstoff auf Basis Tonerde (Al₂O₃) sowie zum weiteren wenigstens einen der folgenden Rohstoffe: Einen Rohstoff auf Basis Siliziumdioxid (SiO₂) oder einen Rohstoff auf Basis Siliziumdioxid und Tonerde. Besonders bevorzugt umfasst der zur Herstellung des erfindungsgemäßen Schmelzrohstoffs zur Verfügung gestellte Versatz zum einen einen Rohstoff auf Basis Tonerde sowie zum weiteren wenigstens einen Rohstoff auf Basis Siliziumdioxid und Tonerde.

Ein Rohstoff auf Basis Tonerde kann bevorzugt in Form wenigstens eines der folgenden Rohstoffe vorliegen: Kalzinierte Tonerde, Schmelzkorund oder Sinterkorund. Besonders bevorzugt liegt als Rohstoff auf Basis Tonerde ein Rohstoff in Form von kalzinierter Tonerde vor.

Ein Rohstoff auf Basis Siliziumdioxid und Tonerde kann bevorzugt in Form wenigstens eines der folgenden Rohstoffe vorliegen: Kaolin, Metakaolin oder Schamotte.

Ein Rohstoff auf Basis Siliziumdioxid kann bevorzugt in Form von Mikrosilika vorliegen.

Um die Anteile an Kohlenstoff im erfindungsgemäßen Schmelzrohstoff zur Verfügung zu stellen, umfasst der zur Herstellung des erfindungsgemäßen Schmelzrohstoffs zur Verfügung gestellte Versatz bevorzugt wenigstens einen Kohlenstoffträger, also einen Rohstoff, der Träger freien Kohlenstoffs ist. Bevorzugt liegt als Kohlenstoffträger Graphit vor.

Um die Anteile an Stickstoff im erfindungsgemäßen Schmelzrohstoff zur Verfügung zu stellen, kann bevorzugt vorgesehen sein, dass der Versatz in einer Atmosphäre erschmolzen wird, die Stickstoff umfasst, beispielsweise aus der Luft. Der Stickstoff wird insoweit während des Erschmelzens aus der umgebenden Atmosphäre in den Schmelzrohstoff eingebunden.

Die Rohstoffe des Versatzes zur Herstellung des erfindungsgemäßen Schmelzrohstoffs werden derart zusammengestellt, dass der Schmelzrohstoff nach dem Erschmelzen und Abkühlen des Versatzes die hierin genannte Zusammensetzung aufweist. Insoweit wurde erfindungsgemäß festgestellt, dass Teile des Kohlenstoffs (insbesondere in Form von CO₂) sowie Teile des Siliziumdioxids des Versatzes während des Erschmelzens in die Gasphase übergehen, sich entsprechend verflüchtigen und daher nicht mehr für den Schmelzrohstoff zur Verfügung stehen. Daher enthält der Versatz, aus dem der erfindungsgemäße Schmelzrohstoff erschmolzen wird, regelmäßig höhere Anteile an Silizium und Kohlenstoff als der erfindungsgemäße Schmelzrohstoff.

Der für die Herstellung des erfindungsgemäßen Schmelzrohstoffs zur Verfügung gestellte Versatz kann bevorzugt die folgenden Anteile an einem Rohstoff auf Basis Tonerde, an einem Rohstoff auf Basis Tonerde und Siliziumdioxid sowie an einem Kohlenstoffträger aufweisen: Rohstoff auf Basis Tonerde: 87-95 Masse-%, bevorzugter 87-91 Masse-%;
Rohstoff auf Basis Tonerde und Siliziumdioxid: 1-12 Masse-%, bevorzugter 7-9 Masse-%;
Kohlenstoffträger: 1-4 Masse-%, bevorzugter 2-4 Masse-%.

Die vorgemachten Angaben in Masse-% sind jeweils bezogen auf die Gesamtmasse des Versatzes.

Bevorzugt ist vorgesehen, dass der zu erschmelzende Versatz die vorbezeichneten Rohstoffe in einem Gesamtanteil von wenigstens 99 %, noch bevorzugter zu 100 % aufweist, bezogen auf die Gesamtmasse des zu erschmelzenden Versatzes.

Das Erschmelzen des Versatzes kann gemäß den aus dem Stand der Technik bekannten Technologien zum Erschmelzen von Versätzen zur Herstellung von feuerfesten Schmelzrohstoffen erfolgen, insbesondere bevorzugt in einem Elektrolichtbogenofen. Bevorzugt erfolgt das Erschmelzen unter reduzierender Atmosphäre. Nach dem Erschmelzen des Versatzes wird die Schmelze auf Raumtemperatur abgekühlt, wobei die Schmelze erstarrt und ein erfindungsgemäßer Schmelzrohstoff erhalten wird. Anschließend kann die Schmelze, wie oben ausgeführt, zerkleinert werden.

Grundsätzlich wurde erfindungsgemäß festgestellt, dass die Thermoschockbeständigkeit und Korrosionsbeständigkeit einer erfindungsgemäßen Platte bereits dann durch den erfindungsgemäßen Schmelzrohstoff verbessert werden kann, wenn die Platte den Schmelzrohstoff in sehr geringen Anteilen umfasst, beispielsweise in einem Anteil von wenigstens 1 Masse-%. Erfindungsgemäß wurde festgestellt, dass sich eine erhebliche Verbesserung der Thermoschockbeständigkeit und Korrosionsbeständigkeit der Platte einstellt, wenn diese den Schmelzrohstoff in einem Anteil von wenigstens 3 Masse-% umfasst. Ferner wurde erfindungsgemäß festgestellt, dass sich die Thermoschockbeständigkeit und Korrosionsbeständigkeit einer erfindungsgemäßen Platte kaum weiter verbessern lässt oder sich sogar wieder verschlechtern kann (die Sprödigkeit der Platte kann ansteigen), wenn der Anteil des erfindungsgemäßen Schmelzrohstoffs in der Platte sehr hoch ist, insbesondere ab einem Anteil von über 70 Masse-%. Erfindungsgemäß wurde festgestellt, dass eine erfindungsgemäße Platte die besten Werte für eine Thermoschockbeständigkeit und Korrosionsbeständigkeit aufweist, wenn diese den erfindungsgemäßen Schmelzrohstoff in einem Anteil von etwa 50 Masse-% aufweist. Insoweit ist nach einer bevorzugten Ausführungsform vorgesehen, dass die erfindungsgemäße Platte den erfindungsgemäßen Schmelzrohstoff in einem Anteil im Bereich von 3 bis 70 Masse-% aufweist, noch bevorzugter in einem Anteil im Bereich von 20 bis 60 Masse-%, noch bevorzugter in einem Anteil im Bereich von 30 bis 60 Masse-% und besonders bevorzugt in einem Anteil von 50 Masse-%, jeweils bezogen auf die Gesamtmasse der Platte.

Die erfindungsgemäße Platte liegt in Form eines ungebrannten oder gebrannten feuerfesten Erzeugnisses vor, das den erfindungsgemäßen Schmelzrohstoff umfasst.

Soweit die erfindungsgemäße Platte ungebrannt vorliegt, liegt diese bevorzugt als Grünkörper vor, insbesondere als harzgebundene (insbesondere getemperte) ungebrannte Platte, die den erfindungsgemäßen Schmelzrohstoff umfasst.

Soweit die erfindungsgemäße Platte gebrannt vorliegt, liegt diese bevorzugt als kohlenstoffgebundene Platte vor, die den erfindungsgemäßen Schmelzrohstoff umfasst.

Besonders bevorzugt liegt die erfindungsgemäße Platte in Form eines feuerfesten Erzeugnisses auf Basis von Alumina und Kohlenstoff vor (also als sogenanntes feuerfestes "Alumina-Kohlenstoff-Erzeugnis").

Solche Platten in Form eines Alumina-Kohlenstoff-Erzeugnisses auf Basis von Alumina und Kohlenstoff sind aus dem Stand der Technik bekannt. Solche Platten gemäß dem Stand der Technik basieren auf Aluminarohstoffen, insbesondere Schmelzkorund, und gegebenenfalls auch weiteren Rohstoffen, insbesondere in Form von Zirkonoxid, sowie etwaigen Additiven (beispielsweise Elastifizierern in Form von Zirkonmullit) und Antioxidantien (beispielsweise Metallen oder Metallcarbiden).

Beim Brand solcher Platten bilden die Kohlenstoffanteile der Platte eine Kohlenstoffbindung aus, so dass die gebrannte Platte als kohlenstoffgebundenes feuerfestes Erzeugnis vorliegt.

Die erfindungsgemäße Platte kann entsprechend solchen Platten in Form von Alumina-Kohlenstoff-Erzeugnissen gemäß dem Stand der Technik aufgebaut sein, mit dem Unterschied, dass die Aluminarohstoffe ganz oder teilweise in Form des erfindungsgemäßen Schmelzrohstoffs vorliegen. Zur Herstellung der erfindungsgemäßen Platte kann entsprechend auf die aus dem Stand der Technik bekanten Technologien zur Herstellung solcher Platten in Form von Alumina-Kohlenstoff-Erzeugnissen zurückgegriffen werden.

Neben dem erfindungsgemäßen Schmelzrohstoff umfasst die erfindungsgemäße Platte einen oder mehrere weitere feuerfeste Rohstoffe, insbesondere einen oder mehrere weitere feuerfeste Rohstoffe, die aus dem Stand der Technik bekannte, feuerfeste Platten für Schieberverschlüsse aufweisen. Insbesondere kann die erfindungsgemäße Platte, neben dem hierin beschriebenen erfindungsgemäßen Schmelzrohstoff, einen oder mehrere feuerfeste Rohstoffe auf Basis wenigstens eines der folgenden Rohstoffe umfassen: Tonerde, Zirkonia oder Zirkonmullit.

Nach einer bevorzugten Ausführungsform weist die erfindungsgemäße Platte - neben dem erfindungsgemäßen Schmelzrohstoff - einen oder mehrere weitere Rohstoffe auf Basis wenigstens eines der Rohstoffe Tonerde, Zirkonia oder Zirkonmullit in einem Gesamtanteil von 30 bis 95 Masse-%, noch bevorzugter in einem Gesamtanteil im Bereich von 40 bis 80 Masse-%, noch bevorzugte in einem Gesamtanteil im Bereich von 40 bis 70 Masse-% und noch bevorzugter in einem Gesamtanteil von 40 bis 50 Masse-% auf, jeweils bezogen auf die Gesamtmasse der Platte.

Besonders bevorzugt umfasst die erfindungsgemäße Platte neben dem hierin beschriebenen Schmelzrohstoff und einem oder mehreren Rohstoffen auf Basis Tonerde, Zirkonia oder Zirkonmullit den weiteren Rohstoff Kohlenstoff (insbesondere in Form von Graphit), bevorzugt in einem Anteil im Bereich von 1 bis 10 Masse-%, besonders bevorzugt in einem Anteil im Bereich von 2 bis 9 Masse-%, bezogen auf die Gesamtmasse der Platte.

Zur Herstellung der erfindungsgemäßen Platte können der erfindungsgemäße Schmelzrohstoff und die weiteren Rohstoffe zur Herstellung der Platte miteinander gemischt und gemäß dem Stand der Technik zu Platten, insbesondere in Form von kohlenstoffgebundenen Platten verarbeitet werden.

Insoweit können der erfindungsgemäße Schmelzrohstoff und die weiteren Rohstoffe zur Herstellung einer kohlenstoffgebundenen Platte zunächst miteinander gemischt werden, insbesondere unter Zugabe eines verkokbaren Bindemittels. Insoweit kann auf die aus dem Stand der Technik bekannten verkokbaren Bindemittel zur Herstellung kohlenstoffgebundener feuerfester keramischer Erzeugnisse zurückgegriffen werden, beispielsweise verkokbare Bindemittel in Form von Kunstharz oder Pech.

Die neben dem erfindungsgemäßen Schmelzrohstoff vorliegenden Rohstoffe in dem Versatz zur Herstellung der erfindungsgemäßen Platte können einer oder mehrere Rohstoffe auf Basis Tonerde, Zirkonia oder Zirkonmullit sein. Als weitere Rohstoffe können ein oder mehrere Kohlenstoffträger sowie Antioxidantien und Elastifizierer im Versatz vorliegen.

Die miteinander vermischten Rohstoffe des Versatzes zur Herstellung der erfindungsgemäßen Platte können mit den aus dem Stand der Technik bekannten Verfahren zunächst durch Pressen zu einem Grünkörper geformt werden. Dieser Grünkörper stellt bereits eine Ausführungsform der erfindungsgemäßen Platte dar, nämlich eine Ausführungsform in Form einer ungebrannten Platte. Der Grünkörper beziehungsweise die ungebrannte erfindungsgemäße Platte kann anschließend gebrannt werden, insbesondere unter reduzierenden Bedingungen. Während des Brandes bildet der Kohlenstoff des Versatzes beziehungsweise des Grünkörpers eine Kohlenstoffbindung aus, so dass der gebrannte Grünkörper anschließend als feuerfestes Erzeugnis in Form einer erfindungsgemäßen gebrannten Platte, nämlich in Form einer gebrannten, kohlenstoffgebundenen feuerfesten Platte vorliegt.

Aus der erfindungsgemäßen ungebrannten Platte lässt sich eine erfindungsgemäße gebrannte Platte mit hervorragenden feuerfesten Eigenschaften herstellen. So kann die erfindungsgemäße gebrannte Platte die folgenden Eigenschaften aufweisen.

Insbesondere kann die erfindungsgemäße gebrannte (nicht mit Pech getränkte) Platte wenigstens einen der nachfolgenden physikalischen Werte aufweisen:
Wärmedehnungskoeffizient < 9,0*10⁻⁶ K⁻¹;
Dynamisches Elastizitätsmodul (E-Modul) bei 1.400°C unter reduzierenden Bedingungen (Schalllaufzeitmessung) < 65 GPa; Kaltbiegefestigkeit > 15 MPa;
Heißbiegefestigkeit bei 1.400°C in reduzierender Atmosphäre > 13 MPa; Brucharbeit Gf bei 1.400°C in reduzierender Atmosphäre > 250, insbesondere > 300 J/m²;
Nominelle Kerbzugfestigkeit σNT bei 1.400°C in reduzierender Atmosphäre > 5 MPa;
Thermoschockparameter R nach Kingery bei 1.400°C > 10 K;
Thermoschockparameter Rₛₜ nach Hasselmann bei 1.400°C > 5,5 K*m^{1/2}

Bevorzugt weist die erfindungsgemäße Platte sämtliche der vorstehenden physikalischen Werte auf.

Ferner wurde erfindungsgemäß überraschend festgestellt, dass die Heißbiegefestigkeit der erfindungsgemäßen gebrannten Platte durch eine Tränkung der gebrannten Platte in Pech, wie sie aus dem Stand der Technik bekannt ist, ganz erheblich gesteigert werden kann, und zwar regelmäßig überproportional im Vergleich zur Steigerung der Heißbiegefestigkeit bei gattungsgemäßen Platten gemäß dem Stand der Technik durch eine Pechtränkung. So kann eine erfindungsgemäße gebrannte Platte, nachdem diese im gebrannten Zustand in Pech getränkt wurde, eine Heißbiegefestigkeit bei 1.400°C in reduzierender Atmosphäre von über 20 MPa, insbesondere auch von über 30 MPa aufweisen.

Die Wärmedehnung ist bestimmt gemäß DIN 51045-4:2007-01.

Der Dynamische Elastizitätsmodul ist bestimmt gemäß DIN 51942:2002.

Die Kaltbiegefestigkeit ist bestimmt gemäß DIN EN 993-6:1995-04.

Die Heißbiegefestigkeit ist bestimmt gemäß DIN EN 993-7:1998.

Die Brucharbeit sowie die nominelle Kerbzugfestigkeit sind bestimmt gemäß den Angaben in der folgenden Literaturstelle, wobei die Messungen bei 1.400°C durchgeführt wurden: Harmuth H., Manhart Ch., Auer Th., Gruber D.: "Fracture Mechanical Characterisation of Refractories and Application for Assessment and Simulation of the Thermal Shock Behaviour", CFI Ceramic Forum International, Vol. 84, Nr. 9, pp. E80 - E86 (2007).

Der Thermoschockparameter R nach Kingery wurde bestimmt gemäß den Angaben in der folgenden Literaturstelle: "Factors Affecting Thermal Stress Resistance of Ceramics Materials", J. Am. Ceram. Soc. 1955; 38 (1): 3-15. Danach wird der Thermoschockparameter R berechnet gemäß R = Nominelle Kerbzugfestigkeit / (Wärmedehnungskoeffizient * E-Modul)

Der Thermoschockparameter Rₛₜ nach Hasselmann wurde bestimmt gemäß den Angaben in der folgenden Literaturstelle: Hasselmann DPH: "Unified theory of thermal shock fracture intiation and crack propagation in brittle ceramics", J. Am. Ceram. Soc. 1969; 52 (11): 600-04. Danach wird der Thermoschockparameter Rₛₜ berechnet gemäß Rₛₜ = Wurzel aus [G_{f} / (2 * Wärmedehnungskoeffizient² * E-Modul)].

Ferner zeichnet sich die erfindungsgemäße Platte durch eine hervorragende Korrosionsbeständigkeit aus, was beispielsweise durch einen ITO-Test nachgewiesen werden kann (siehe unten).

Gegenstand der Erfindung ist auch die Verwendung des erfindungsgemäßen Schmelzrohstoffs als Rohstoff in einer Platte.

Gegenstand der Erfindung ist auch ein Schmelzgefäß zur Aufnahme von flüssigem Stahl, wobei das Schmelzgefäß wenigstens eine erfindungsgemäße Platte zur Regelung einer Durchflussmenge von flüssigem Stahl aus dem Schmelzgefäß aufweist.

Bei dem Schmelzgefäß kann es sich insbesondere um ein Schmelzgefäß in einer Stranggießanlage zum Gießen von Stahl handeln, insbesondere um eine Gießpfanne oder um eine Zwischenpfanne.

Weitere Merkmale der Erfindung ergeben sich aus den Ansprüchen sowie aus der nachfolgenden Beschreibung eines Ausführungsbeispiels der Erfindung.

Sämtliche Merkmale der Erfindung können, einzeln oder in Kombination, beliebig miteinander kombiniert sein.

Ein Ausführungsbeispiel der Erfindung wird nachfolgend näher erläutert.

Gegenstand des Ausführungsbeispiels der Erfindung ist eine feuerfeste Platte in Form einer kohlenstoffgebundenen feuerfesten Schieberplatte auf Basis der Rohstoffe Tonerde, Zirkonmullit sowie des erfindungsgemäßen Schmelzrohstoffs.

Zur Herstellung der Schieberplatte wurde ein Versatz zur Verfügung gestellt, der die Rohstoffe in den Anteilen gemäß der nachfolgenden Tabelle 1, jeweils bezogen auf die Gesamtmasse des Versatzes, aufwies:

**Tabelle 1**

| **Rohstoff** | **Massenanteil [Masse-%]** |
|---|---|
| Schmelzrohstoff > 1,0 bis 3,0 mm | 21,1 |
| Schmelzrohstoff > 0,5 bis 1,0 mm | 10,6 |
| Schmelzrohstoff > 0,0 bis 0,5 mm | 17,3 |
| Tonerde < 125 µm | 21,8 |
| Zirkonmullit < 3,0 mm | 16,1 |
| Graphit | 3,0 |
| Antioxidantien (Silizium und SiC) | 5,5 |
| Hexamethylentetramin | 0,5 |
| Kunstharz (Novolak) | 4,1 |

Der Schmelzrohstoff für den Versatz gemäß Tabelle 1 wurde wie folgt hergestellt.

Zunächst wurde ein Versatz zur Verfügung gestellt, der aus 89 Masse-% kalzinierter Tonerde, 8 Masse-% Schamotte und 3 Masse-% Graphit bestand. Dieser Versatz wurde im Elektrolichtbogenofen zu einer Schmelze erschmolzen. Die Schmelze wurde anschließend auf Raumtemperatur abgekühlt, wobei die Schmelze erstarrte. Die erstarrte Schmelze lag in Form eines erfindungsgemäßen Schmelzrohstoffs vor. Um diesen Schmelzrohstoff in der Körnung gemäß dem Versatz nach Tabelle 1 zur Verfügung zu stellen, wurde der Schmelzrohstoff zerkleinert und durch Siebung in der Korngröße gemäß Tabelle 1 zur Verfügung gestellt.

Der Schmelzrohstoff wies die folgenden Elemente in den Anteilen gemäß der nachfolgenden Tabelle 2 auf, jeweils bezogen auf die Gesamtmasse des Schmelzrohstoffs:

**Tabelle 2**

| **Element** | **Massenanteil [Masse-%]** |
|---|---|
| Aluminium | 51,70 |
| Sauerstoff | 46,70 |
| Kohlenstoff | 0,79 |
| Silizium | 0,69 |
| Stickstoff | 0,12 |
| Weitere | < 0,10 |

Der Schmelzrohstoff wies als mineralogische Hauptphase Korund (Al₂O₃) in einem Anteil über 95,4 Masse-% und daneben die Phasen Al₂₈C₆N₆O₂₁ in einem Anteil von 2,0 Masse-% und SiC in einem Anteil von 1,6 Masse-% auf. Weitere Phasen, unter anderem metallisches Silizium und Spuren von Al₄O₄C, lagen in einer Gesamtmasse von 1,0 Masse-% vor. Die Angaben in Masse-% sind jeweils bezogen auf die Gesamtmasse des Schmelzrohstoffs.

In dem Versatz gemäß Tabelle 1 lagen neben dem erfindungsgemäßen Schmelzrohstoff als weitere Hauptrohstoffe die Rohstoffe Tonerde und Zirkonmullit vor.

Als Kohlenstoffkomponente lag Graphit vor.

Metallisches Silizium und Siliziumcarbid lagen als Antioxidantien vor.

Kunstharz (zusammen mit Hexamethylentetramin als Härter) lag als verkokbares Bindemittel im Versatz vor.

Die Komponenten des Versatzes gemäß Tabelle 1 wurden in einem Mischer innig miteinander vermischt und anschließend in einer Presse zu einem Grünkörper einer Schieberplatte gepresst. Bei dieser Schieberplatte handelte es sich um eine Ausführungsform einer erfindungsgemäßen, ungebrannten Platten in Form einer Schieberplatte.

Der Grünkörper wurde anschließend zunächst bei 250°C getempert, wobei sich leichtflüchtige Bestandteile des Bindemittels verflüchtigten.

Anschließend wurde der getemperte Grünkörper unter reduzierender Atmosphäre auf 1.200°C erhitzt und für eine Dauer von drei Stunden unter reduzierender Atmosphäre auf dieser Temperatur gehalten. Während dieses Brennvorgangs bildeten die Kohlenstoffanteile des Graphits und des Bindmittels eine Kohlenstoffbindung aus.

Nach dem Abkühlen lag eine Ausführungsform einer erfindungsgemäßen Platte in Form einer gebrannten, kohlenstoffgebundenen feuerfesten Schieberplatte vor.

Um die Eigenschaften dieses Ausführungsbeispiels einer erfindungsgemäßen gebrannten Schieberplatte mit den Eigenschaften einer gattungsgemäßen Schieberplatte nach dem Stand der Technik vergleichen zu können, wurde eine gattungsgemäße, gebrannte Schieberplatte gemäß dem Stand der Technik hergestellt. Diese Schieberplatte nach dem Stand der Technik wurde gemäß dem vorstehenden Ausführungsbeispiel hergestellt, jedoch mit dem einzigen Unterschied, wonach statt des erfindungsgemäßen Schmelzrohstoffs Schmelzkorund gemäß dem Stand der Technik verwendet wurde.

Anschließend wurden die physikalischen Eigenschaften an beiden Schieberplatten bestimmt. In der nachfolgenden Tabelle 3 sind die dabei bestimmten physikalischen Eigenschaften angegeben, wobei die erfindungsgemäße Schieberplatte gemäß dem Ausführungsbeispiel mit "E" und die Schieberplatte gemäß dem Stand der Technik mit "S" bezeichnet ist.

**Tabelle 3**

| **Physikalischer Wert** | **S** | **E** |
|---|---|---|
| Wärmedehnungskoeffizient [K⁻¹] | 8,6 ^{∗} 10⁻⁶ | 8,8 ^{∗} 10⁻⁶ |
| Elastizitätsmodul [GPa] | 58,4 | 62,5 |
| Kaltbiegefestigkeit [MPa] | 13 | 16,1 |
| Heißbiegefestigkeit [MPa] | 11,1 | 15,1 |
| Brucharbeit [J/m²] | 249 | 346 |
| Kerbzugfestigkeit [MPa] | 3,6 | 6,8 |
| Thermoschockparamter R nach Kingery [K] | 7,2 | 12,5 |
| Thermoschockparameter Rₛₜ nach Hasselmann [K*m^{1/2}] | 5,4 | 6,0 |

Der Elastizitätsmodul ist der dynamische Elastizitätsmodul, der durch Schalllaufzeitmessung bei 1.400°C unter reduzierenden Bedingungen gemessen wurde.

Die Heißbiegefestigkeit wurde bei 1.400°C unter reduzierenden Bedingungen gemessen.

Die Brucharbeit ist die Brucharbeit Gf, die ebenfalls bei 1.400°C unter reduzierenden Bedingungen gemessen wurde.

Die nominelle Kerbzugfestigkeit ist die nominelle Kerbzugfestigkeit σNT bei 1.400°C unter reduzierenden Bedingungen.

Die Thermoschockparameter R nach Kingery und Rₛₜ nach Hasselmann wurden jeweils berechnet auf Basis von Parametern, die bei 1.400°C unter reduzierenden Bedingungen gemessen wurden.

Sämtliche Werte wurden dabei gemäß den oben angegebenen Normen beziehungsweise Literaturstellen gemessen beziehungsweise bestimmt.

Wie sich aus Tabelle 3 ergibt, erwies sich die erfindungsgemäße Schieberplatte dabei hinsichtlich praktisch jedes dieser Werte (mit Ausnahme des Elastizitätsmoduls) als der gattungsgemäßen Schieberplatte nach dem Stand der Technik überlegen.

Ferner wurden jeweils eine erfindungsgemäße Schieberplatte sowie eine Schieberplatte nach dem Stand der Technik gemäß dem vorstehenden Ausführungsbeispiel hergestellt, jedoch mit dem Unterschied, dass beide Schieberplatten nach dem Brand mit Pech getränkt wurden. Danach wies die Ausführungsform der gebrannten erfindungsgemäßen Schieberplatte eine Heißbiegefestigkeit von 34,2 MPa und die gebrannte Schieberplatte nach dem Stand der Technik eine Heißbiegefestigkeit von 14,4 MPa auf.

Zur Bestimmung der Korrosionsbeständigkeit der (nicht mit Pech getränkten) Schieberplatten wurde ferner ein sogenannter ITO-Test durchgeführt. Dabei wurden aus der erfindungsgemäßen Schieberplatte E sowie aus der Schieberplatte S gemäß dem Stand der Technik Steinsegmente geschnitten und als Teil einer Ofenausmauerung verwendet, an der ein Korrosionstest gemäß dem sogenannten "Induktionstiegelofentest" (ITO-Test) wie folgt durchgeführt wurde:
Zunächst wurde ein Ofen errichtet, dessen feuerfeste Ausmauerung wandseitig aus Steinsegmenten gebildet war. Im späteren Schlackenbereich war die Ausmauerung teilweise aus den vorbezeichneten Steinsegmenten der Schieberplatten E und S gebildet. Die feuerfeste Ausmauerung umschloss einen kreiszylindrischen Ofenraum, in den ein passender, kreiszylindrischer Metalleinsatz (60 kg Stahl) gesetzt wurde. Der Metalleinsatz wurde durch Spulen, die ringförmig außen um die Ausmauerung geführt waren, auf 1.600°C erhitzt und erschmolzen. Auf die Stahlschmelze wurde ein Schlackenpulver (3 kg) mit der chemischen Zusammensetzung gemäß der nachfolgenden Tabelle 4 aufgegeben (Anteile angegeben in Bezug auf die Gesamtmasse des Schlackenpulvers), welches aufschmolz und einen Schlackenbereich mit einer korrosiven Schlacke bildete. Die Schlacke reagierte im Schlackenbereich mit den Steinsegmenten aus den Schieberplatten E und S und beschädigte diese hierdurch korrosiv. Die Steinsegmente wurden insgesamt etwa fünf Stunden durch die Schlacke korrodiert, wobei die Schlacke regelmäßig erneuert wurde. Anschließend wurde die Ausmauerung ausgebaut und an den Steinsegmenten der Korrosionsgrad getestet, nämlich die Verschleißfläche.

**Tabelle 4**

| **Bestandteil der Schlacke** | **Massenanteil [Masse-%]** |
|---|---|
| Al₂O₃ | 10,0 |
| SiO₂ | 10,1 |
| Fe₃O₄ | 26,1 |
| CaO | 37,6 |
| MnO | 11,1 |
| MgO | 4,2 |
| F | 0,5 |
| S | 0,4 |

Für die Bestimmung des Verschleißes wurde die Verschleißfläche der Steinsegmente aus der Schieberplatte S gemäß dem Stand der Technik normalisiert mit 100% festgesetzt und in Bezug zu dem entsprechenden Wert für die Steinsegmente aus der erfindungsgemäßen Schieberplatte E gesetzt. Die Verschleißfläche ist dabei die maximale Querschnittsfläche der korrodierten Bereiche der Steinsegmente. Danach betrug der Verschleiß der Steinsegmente der erfindungsgemäßen Schieberplatte E im Mittel nur 82 % der Verschleißfläche der Steinsegmente aus der Schieberplatte S nach dem Stand der Technik.

## Patentansprüche

1. Feuerfeste Platte für einen Schieberverschluss zur Regelung einer Durchflussmenge von flüssigem Stahl, die einen Schmelzrohstoff umfasst, wobei der Schmelzrohstoff die folgenden Elemente jeweils in einem Anteil im Bereich der folgenden Massenanteile umfasst:
| | |
|---|---|
| Aluminium: | 46 bis 55 Masse-%; |
| Sauerstoff: | 42 bis 49 Masse-%; |
| Kohlenstoff: | 0,1 bis 3 Masse-%; |
| Silizium: | 0,1 bis 4 Masse-%. |

2. Platte nach Anspruch 1, wobei der Schmelzrohstoff die Phase Al₂₈C₆N₆O₂₁ umfasst.

3. Platte nach wenigstens einem der vorhergehenden Ansprüche, wobei der Schmelzrohstoff die Phase Al₂₈C₆N₆O₂₁ in einem Anteil im Bereich von 0,05 bis 10 Masse-% aufweist.

4. Platte nach wenigstens einem der vorhergehenden Ansprüche, wobei der Schmelzrohstoff das Element Stickstoff umfasst.

5. Platte nach wenigstens einem der vorhergehenden Ansprüche, wobei der Schmelzrohstoff das Element Stickstoff in einem Anteil von maximal 0,3 Masse-% aufweist.

6. Platte nach wenigstens einem der vorhergehenden Ansprüche, wobei der Schmelzrohstoff die Elemente Aluminium, Sauerstoff, Kohlenstoff, Silizium und Stickstoff in einem Gesamtanteil von wenigstens 98 Masse-% aufweist.

7. Platte nach wenigstens einem der vorhergehenden Ansprüche, wobei der Schmelzrohstoff metallisches Silizium umfasst.

8. Platte nach wenigstens einem der vorhergehenden Ansprüche, wobei der Schmelzrohstoff die Phase SiC umfasst.

9. Platte nach wenigstens einem der vorhergehenden Ansprüche, wobei der Schmelzrohstoff die Phase Korund umfasst.

10. Platte nach wenigstens einem der vorhergehenden Ansprüche, die den Schmelzrohstoff in einem Anteil im Bereich von 3 bis 70 Masse-% aufweist.

11. Platte nach wenigstens einem der vorhergehenden Ansprüche in Form eines entweder ungebrannten oder gebrannten kohlenstoffgebundenen Erzeugnisses.

12. Platte nach wenigstens einem der vorhergehenden Ansprüche, die wenigstens einen der nachfolgenden physikalischen Werte aufweist:
Wärmedehnungskoeffizient < 9,0*10⁻⁶ K⁻¹;
Dynamisches Elastizitätsmodul (E-Modul) bei 1.400°C in reduzierender Atmosphäre (Schalllaufzeitmessung) < 65 GPa;
Kaltbiegefestigkeit > 15 MPa;
Heißbiegefestigkeit bei 1.400°C in reduzierender Atmosphäre > 13 MPa;
Brucharbeit Gf bei 1.400°C in reduzierender Atmosphäre > 250, insbesondere > 300 J/m²;
Nominelle Kerbzugfestigkeit σNT bei 1.400°C in reduzierender Atmosphäre > 5 MPa;
Thermoschockparameter R nach Kingery bei 1.400°C > 10 K;
Thermoschockparameter Rₛₜ nach Hasselmann bei 1.400°C > 5,5 K*m^{1/2}.

13. Verwendung eines Schmelzrohstoffs gemäß wenigstens einem der vorhergehenden Ansprüche als Rohstoff in einer Platte für einen Schieberverschluss.

14. Schmelzgefäß zur Aufnahme von flüssigem Stahl, wobei das Schmelzgefäß wenigstens eine Platte gemäß einem der vorhergehenden Ansprüche zur Regelung einer Durchflussmenge von flüssigem Stahl aus dem Schmelzgefäß aufweist.

15. Schmelzgefäß nach Anspruch 14 in Form einer Gießpfanne oder einer Zwischenpfanne in einer Stranggießanlage zur Vergießen von Stahl.

## Claims

1. A refractory plate for a slide gate valve for controlling a flow rate of liquid steel, comprising a fused raw material, wherein the fused raw material comprises the following elements each in a proportion in the range of the following mass fractions:
| | |
|---|---|
| aluminum: | 46 to 55 % by mass; |
| oxygen: | 42 to 49 % by mass; |
| carbon: | 0.1 to 3 % by mass; |
| silicon: | 0.1 to 4 % by mass. |

2. Plate according to claim 1, wherein the fused raw material comprises the phase Al₂₈C₆N₆O₂₁.

3. Plate according to at least one of the preceding claims, wherein the fused raw material comprises the phase Al₂₈C₆N₆O₂₁ in a proportion in the range from 0.05 to 10 % by mass.

4. Plate according to at least one of the preceding claims, wherein the fused raw material comprises the element nitrogen.

5. v according to at least one of the preceding claims, wherein the fused raw material comprises the element nitrogen in a proportion of at most 0.3 % by mass.

6. Plate according to at least one of the preceding claims, wherein the fused raw material comprises the elements aluminum, oxygen, carbon, silicon and nitrogen in a total proportion of at least 98 % by mass.

7. Plate according to at least one of the preceding claims, wherein the fused raw material comprises metallic silicon.

8. Plate according to at least one of the preceding claims, wherein the fused raw material comprises the phase SiC.

9. Plate according to at least one of the preceding claims, wherein the fused raw material comprises the phase corundum.

10. Plate according to at least one of the preceding claims, which comprises the fused raw material in a proportion in the range from 3 to 70 % by mass.

11. Plate according to at least one of the preceding claims in the form of either an unfired or fired carbon bonded product.

12. Plate according to at least one of the foregoing claims, which has at least one of the following physical values:
Thermal expansion coefficient < 9.0*10-6 K⁻¹;
Dynamic modulus of elasticity (Young's modulus) at 1,400°C in reducing atmosphere (sound travel time measurement) < 65 GPa;
Cold bending strength > 15 MPa;
Hot bending strength at 1,400°C in reducing atmosphere > 13 MPa;
Work at break G_{f} at 1,400°C in reducing atmosphere > 250, in particular > 300 J/m²;
Nominal notched tensile strength σNT at 1,400°C in reducing atmosphere > 5 MPa;
Thermal shock parameter R according to Kingery at 1,400°C > 10 K;
Thermal shock parameter Rₛₜ according to Hasselmann at 1,400°C > 5.5 K*m^{1/2}.

13. Use of a melt fused material according to at least one of the preceding claims as raw material in a plate for a slide gate valve.

14. Melting vessel for receiving liquid steel, wherein the melting vessel comprises at least one plate according to one of the preceding claims for controlling a flow rate of liquid steel from the melting vessel.

15. Melting vessel according to claim 14 in the form of a ladle or tundish in a continuous casting plant for casting steel.

## Revendications

1. Plaque réfractaire, destinée à une fermeture coulissante pour la régulation d'un débit d'acier liquide, qui comprend une matière première de fusion, la matière première de fusion comprenant les éléments suivants, respectivement dans une part de l'ordre des parts en masse suivantes :
| | |
|---|---|
| Aluminium : | de 46 à 55 % en masse ; |
| Oxygène : | de 42 à 49 % en masse ; |
| Carbone : | de 0,1 à 3 % en masse ; |
| Silicium : | de 0,1 à 4 % en masse. |

2. Plaque selon la revendication 1, la matière première de fusion comprenant la phase Al₂₈C₆N₆O₂₁.

3. Plaque selon au moins l'une quelconque des revendications précédentes, la matière première de fusion comportant la phase Al₂₈C₆N₆O₂₁ dans une part de l'ordre de 0,05 à 10 % en masse.

4. Plaque selon au moins l'une quelconque des revendications précédentes, la matière première de fusion comprenant l'élément azote.

5. Plaque selon au moins l'une quelconque des revendications précédentes, la matière première de fusion comportant l'élément azote dans une part d'un maximum de 0,3 % en masse.

6. Plaque selon au moins l'une quelconque des revendications précédentes, la matière première de fusion comportant les éléments aluminium, oxygène, carbone, silicium et azote dans une part totale d'au moins 98 % en masse.

7. Plaque selon au moins l'une quelconque des revendications précédentes, la matière première de fusion comprenant du silicium métallique.

8. Plaque selon au moins l'une quelconque des revendications précédentes, la matière première de fusion comprenant la phase SiC.

9. Plaque selon au moins l'une quelconque des revendications précédentes, la matière première de fusion comprenant la phase corindon.

10. Plaque selon au moins l'une quelconque des revendications précédentes, qui comporte la matière première de fusion dans une part de l'ordre de 3 à 70 % en masse.

11. Plaque selon au moins l'une quelconque des revendications précédentes sous la forme soit d'un produit non cuit ou cuit, à liaison carbone.

12. Plaque selon au moins l'une quelconque des revendications précédentes, qui fait preuve d'au moins l'une des valeurs physiques suivantes :
Coefficient de dilatation thermique < 9,0 * 10⁻⁶ K⁻¹ ;
Module d'élasticité dynamique (module de Young) à 1.400 °C sous atmosphère réductrice (mesure du temps de propagation) < 65 GPa ;
Résistance à la flexion à froid > 15 MPa ;
Résistance à la flexion à chaud à 1.400 °C sous atmosphère réductrice > 13 MPa ;
Travail jusqu'à rupture Gf à 1.400 °C sous atmosphère réductrice > 250, notamment > 300 J/m² ;
Résistance nominale à la traction σNT à 1.400 °C sous atmosphère réductrice > 5 MPa ;
Paramètre de choc thermique R selon Kingery à 1.400°C > 10 K ;
Paramètre de choc thermique Rₛₜ selon Hasselmann à 1.400 °C > 5,5 K * m^{1/2}.

13. Utilisation d'une matière première de fusion selon au moins l'une quelconque des revendications précédentes en tant que matière première dans une plaque destinée à une fermeture coulissante.

14. Creuset, destiné à recevoir de l'acier liquide, le creuset comportant au moins une plaque selon l'une quelconque des revendications précédentes pour la régulation d'un débit d'acier liquide hors du creuset.

15. Creuset selon la revendication 14 sous la forme d'une poche de coulée ou d'un panier de coulée dans une installation de coulée continue, destinée à couler de l'acier.
